# EUROPÄISCHE PATENTSCHRIFT

(11) **EP 3 235 794 B1**
(45) Veröffentlichungstag und Bekanntmachung des Hinweises auf die Patenterteilung: **29.01.2020**
(21) Anmeldenummer: 17165522.8
(22) Anmeldetag: 07.04.2017
(51) Int. Cl.: C04B 28/02, C04B 28/12, C04B 28/18, C04B 38/02

(54) **SULFATARMER PORENBETON, SOWIE MISCHUNG UND VERFAHREN ZU SEINER HERSTELLUNG**
LOW SULPHATE POROUS CONCRETE, AND MIXTURE AND METHOD FOR PREPARING SAME
BÉTON CELLULAIRE PAUVRE EN SULFATE, MÉLANGE ET PROCÉDÉ POUR SA FABRICATION

(30) Priorität: 11.04.2016 DE 102016106574
(43) Veröffentlichungstag der Anmeldung: 25.10.2017
(73) Patentinhaber: Cirkel GmbH & Co. KG, 45721 Haltern am See (DE)
(72) Erfinder: Thienel, Karl-Christian, 85579 Neubiberg (DE); Chucholowski, Carola Janine, 82110 Germering (DE); Müller, Holger, 45721 Haltern (DE)
(74) Vertreter: Habbel, Ludwig

(56) Entgegenhaltungen:
- AT-B- 177 713
- DE-A1- 10 041 368
- DE-B4- 10 066 270
- DE-B9-102008 017 251

## Beschreibung

Handelsüblicher Porenbeton ist ein mineralischer Baustoff, in dem die Eigenschaften der tragenden Konstruktion und die Wärmedämmung gleichzeitig miteinander verknüpft sind. Somit können hochwärmegedämmte Mauerwerkskonstruktionen in monolithischer, einschaliger Bauweise erstellt werden.

Aus der AT 177 713 B, DE 100 66 270 und DE 100 41 368 A1 sind jeweils Verfahren zur Herstellung von Porenbeton bekannt.

Die modernen Porenbetonrezepturen enthalten ein Gemisch aus Branntkalk, Zement, Sand und Wasser. Zusätzlich werden Sulfatträger in Form von Anhydrit und / oder Gips zur Verbesserung der Eigenschaften Druckfestigkeit und Schwinden eingesetzt. Die typische Porenstruktur erhält der Baustoff durch Zugabe einer geringen Menge an Aluminiumpulver oder Aluminiumpaste während des Mischvorgangs. Das in der Mischung feinverteilte Aluminium reagiert im alkalischen Medium unter Wasserstoffentwicklung, der die Rohmischung langsam aufbläht. Diese Porenstruktur bleibt dem Produkt auch nach dem eigentlichen hydrothermalen Härteprozess erhalten und ist im Wesentlichen für die Eigenschaften des Endproduktes verantwortlich.

Eine typische Mischung zur Herstellung von Porenbeton enthält die nachfolgenden Bestandteile, angegeben jeweils in Gewichtsprozent und bezogen auf die Trockenmasse der Mischung:
- Quarzmehl (z. B. aus Sandschlamm): 25 bis 65 %
- Porenbetonrückgut aus Produktion: 5 bis 30 %
   Dabei wird als "Rückgut" ungehärtetes Material aus der Produktion des Porenbetons bezeichnet, bevor dieses zum Porenbeton gehärtet wird. Es handelt sich dabei um Material, das beispielsweise während des Zurechtschneidens des Porenbetonblocks in die jeweiligen Steinformate mehr oder weniger anfällt. Diese ungehärteten Materialabschnitte werden gesammelt, mit Wasser vermengt und als Rohstoff in der Rezeptur wieder eingesetzt. Das Rückgut dient insbesondere als Kristallisationskeim bildner.
- Zement: 0 bis 40 %
- Branntkalk (CaO-Anteil 90 - 99 %): 5 bis 25 %
- Sulfatträger, z. B. Anhydrit, Gips: 1 bis 15 %
- Porenbeton gemahlen: 0 bis 15 %
- Aluminiumkomponente: 0,05 bis 0,4 %
- und Wasser

Die Frage der Recyclingfähigkeit gewinnt zunehmend an Bedeutung. Auf der einen Seite stehen europäische Forderungen nach einer Reduzierung des Abfallvolumens, die einhergehen mit der Schließung von Deponien und einem erhöhten Druck zu mehr Recycling. Auf der anderen Seite stehen verschärfte Anforderungen im Hinblick auf den Schutz der Umwelt wie Geringfügigkeitsschwellen und Vorgaben in dem Entwurf der Ersatzbaustoffverordnung im Rahmen der Mantelverordnung Grundwasser / Ersatzbaustoffe / Bodenschutz, die zum Teil ein Recyceln am Markt befindlicher Baustoffe - wie im vorliegenden Fall Porenbeton - deutlich erschweren.

Eine vom Bundesverband Porenbetonindustrie e.V. in Auftrag gegebene unveröffentlichte Studie der LGA Nürnberg im März 2010 untersuchte an 22 handelsüblichen Porenbetonprüfkörpern das Auslaugverhalten im Hinblick auf Sulfat. Die Studie ergab hohe Sulfatkonzentrationen der Eluate zwischen 900 und 1650 mg/l. Der Grenzwert für mineralische Ersatzbaustoffe liegt laut Ersatzbaustoffverordnung bei 250 mg/l Sulfat im Eluat.

In der Literatur sind zwar sulfatfreie Rezepturen bekannt, jedoch erfüllen die mit diesen Rezepturen hergestellten Porenbetone und Schaumbetone nicht die heutigen Anforderungen hinsichtlich bestimmter Gütemerkmale wie Dauerhaftigkeit und / oder Schwindverhalten. Um diese Gütemerkmale über den gesamten Rohdichte- und Festigkeitsbereich nach EN 771-4 und DIN 20000-404 einhalten zu können, scheint es erforderlich zu sein, dass die jeweiligen Rezepturen einen Sulfatträger in Form von Gips- und / oder Anhydrit enthalten.

Aus der DE 10 2008 017 251 B9, die als am nächsten kommender Stand der Technik angesehen wird, und der EP 2 234 940 B1 ist jeweils ein Verfahren zur Herstellung von Porenbeton bekannt sowie eine Anlage zur Durchführung des Verfahrens. Dabei wird eine zement- und sulfatträgerfreie Rezeptur verwendet. Wie an sich aus der Praxis bekannt, wird zunächst ein so genannter Porenbetonkuchen in einer flachen, wannenartigen Gießform hergestellt, die anschließend um 90° hochkant gekippt wird. In dieser hochkant stehenden Ausrichtung wird nach dem Ausschalen der einstückige, noch nicht durchgehärtete, sondern stand- und schnittfeste Porenbetonkuchen in einzelne Porenbetonsteine geschnitten. Später erfolgt die endgültige Aushärtung im Autoklaven, typischerweise unter einer gesättigten Wasserdampfatmosphäre bei einer Temperatur von rund 190°C und einem Druck von ca. 12 bar.

Der stets vorgesehene Wasseranteil kann bei dieser bekannten Rezeptur nach dem Schneiden in dem nun aus einzelnen Steinen bestehenden Porenbetonkuchen nach unten fließen. Dies kann zu den an sich bekannten Nachteilen führen: Erstens besteht die Gefahr, dass sich eine Stauzone von Wasser innerhalb des Porenbetonkuchens ergibt, und das innerhalb dieser Stauzone die einzelnen Steine miteinander verkleben, so dass später der vollständig durchgehärtete Porenbeton nicht vollständig in sämtliche vorgesehenen Steine aufgetrennt und verpackt werden kann. Die in der Wasser-Stauzone liegenden, zusammenklebenden Steine sind wirtschaftlich nicht verwertbar und müssen aussortiert werden. Zweitens besteht die Gefahr, dass nach unten geflossenes Wasser die bodennahen Steine aufweicht, so dass der hohe Druck des hochkant stehenden Porenbetonkuchens zu unerwünschten Verformungen führt: Die lediglich angesteiften, aber noch nicht durchgehärteten unteren Steine können sich nach außen verformen und so genannte "Elefantenfüße" bilden, so dass diese Steine nicht maßhaltig und nicht wirtschaftlich verwendbar sind.

Bei dem aus der DE 10 2008 017 251 B9 bzw. EP 2 234 940 B1 bekannten Verfahren ist daher als eine erste Maßnahme vorgesehen, einen zusätzlichen Verfahrensschritt durchzuführen und den hochkant stehenden, in einzelne Steine geschnittenen Porenbetonkuchen um 90° zurück in eine flach liegende Position zu schwenken und erst dann zu autoklavieren. Alternativ dazu kann als eine zweite Maßnahme das Wasser immobilisiert werden, so dass es in dem hochkant stehenden Porenbetonkuchen nicht nach unten fließt, und so dass möglicherweise auf den erwähnten zusätzlichen Verfahrensschritt verzichtet werden kann. Diese zweite Maßnahme besteht darin, zusätzliche Stoffe in der Rezeptur vorzusehen, welche das Wasser immobilisieren, beispielsweise hochdisperse Kieselsäure. Wenn zudem ohnehin eine möglichst geringe Wassermenge in der Rezeptur verwendet wird ist zusätzlich in der Rezeptur ein Fließverbesser erforderlich.

Für die Qualität des Porenbetons kann der im ausgehärteten Porenbeton vorgefundene Tobermorit als Indikator genutzt werden: sowohl sein mengenmäßiger Anteil als auch seine morphologisehe Ausgestaltung stehen im Zusammenhang mit einerseits der mechanischen Stabilität des Porenbetons, insbesondere der Druckbelastbarkeit, und andererseits mit dem Schwindungsverhalten des Porenbetons.

In der Praxis kann das Problem auftauchen, dass nach der Herstellung des Porenbetons Thaumasit gebildet wird. Beispielsweise kann während der Bauphase von Objekten aus Porenbetonsteinen und Schaumbetonen unter bestimmten Bedingungen, z. B. auf den Rohbau niedergehenden Niederschlägen, Sulfat eluiert werden und am Mauerwerk herabfließen. Wenn ein nicht sulfatbeständiger, mineralischer Mauermörtel verwendet wird, kann es bei Anwesenheit von Sulfationen und unter bestimmten klimatischen Bedingungen zur Thaumasitbildung im Mörtel kommen. Da die Kristallisation des Thaumasits mit einer Volumenzunahme verbunden ist, ist nicht auszuschließen, dass der Mauerwerkverbund zwischen dem Porenbeton- bzw. Schaumbetonstein und der Mörtelfuge zerstört wird.

Der Erfindung liegt die Aufgabe zugrunde, eine möglichst wirtschaftliche Herstellung eines sulfatarmen Porenbetons zu ermöglichen.

Diese Aufgabe wird gelöst durch einen Porenbeton nach Anspruch 1, durch eine Mischung nach Anspruch 2 und durch ein Verfahren nach Anspruch 11.

Die Erfindung betrifft mit anderen Worten eine neuartige Porenbeton-Rezeptur, die einerseits mit Hilfe der an sich bekannten Herstellungsverfahren verarbeitet werden kann, ohne zusätzliche Verfahrensschritte oder zusätzlichen apparativen Aufwand, und die andererseits möglichst wenig Materialien erfordert, beispielsweise keine zusätzlichen Wasserrückhaltemittel, Fließverbesserer. Im Ergebnis kann daher der sulfatarme Porenbeton wirtschaftlich hergestellt werden. Der vorschlagsgemäße sulfatarme Porenbeton ermöglicht es, die Sulfatkonzentrationen im Eluat und dementsprechend die damit verbundenen Auswirkungen zu vermindern. In der Konsequenz können so die bestehenden Einschränkungen der Recyclingfähigkeit von Bauschutt aus Porenbeton minimiert werden. Das Abfallvolumen kann folglich reduziert und die Recyclingfähigkeit erhöht werden.

Vorschlagsgemäß ist vorgesehen, dass die Rezeptur möglichst zementarm ist und möglichst ohne die bisher eingesetzten Sulfatträger auskommt. Diese beiden Komponenten Zement und Sulfatträger werden vorschlagsgemäß möglichst vollständig ersetzt, wozu vorschlagsgemäß zwei unterschiedlich großtechnisch gebrannte Tone der Bezeichnung CT (calcinierter Ton) und AT (amorpher Ton) verwendet werden. Bei dem calcinierten Ton handelt es sich um einen Ton, der bei einer vergleichsweise niedrigeren Temperatur von ca. 750°C gebrannt wird, und bei dem amorphen Ton um einen so genannten hochgebrannten Ton, der bei ca. 1000°C gebrannt wird. Es hat sich gezeigt, dass die vorgenannten Tone CT und AT als Substitutionsmaterial für Zemente, bei gleichzeitiger Verbesserung in der Festigkeit von Mörtelprismen, in zementären Systemen dienen können.

Die vorschlagsgemäße Porenbetonrezeptur ergibt nach dem Ansteifen eine ausreichend stabile Konsistenz, dass der Porenbeton im Laufe der weiteren Bearbeitung durch Transport, Zurechtsägen sowie Autoklavierung seine Stabilität nicht verliert. Die dazu ausreichende Festigkeit des Porenbetonkuchens wird auch als Rohlingsfestigkeit bezeichnet, und dementsprechend kann der Porenbetonkuchen auch als Rohlingskuchen bezeichnet werden.

Wirtschaftlich vorteilhaft kann auf weitere Zusätze verzichtet werden, wie sie ansonsten im Zusammenhang mit der Immobilisierung des Wassers erforderlich werden könnten. In an sich bekannter Weise können gegenüber der Basisrezeptur des Porenbetons zusätzliche Stoffe in die Rezeptur aufgenommen werden, um den Porenbeton dementsprechend zu beeinflussen, wie z.B. Farbpigmente oder dergleichen.

Ebenso resultiert aus dieser stabilen Konsistenz, die der vorschlagsgemäße Porenbetonkuchen nach dem Ansteifen aufweist, eine wirtschaftliche Verfahrensweise, da die herkömmlichen Verfahrensschritte und Anlagen zur Herstellung von Porenbeton im Wesentlichen beibehalten werden können. Beispielsweise müssen die Rohlinge zur Autoklavierung nicht aus ihrer Hochkant-Ausrichtung in die horizontale Lage zurück gekippt und in dieser flach liegenden Ausrichtung autoklaviert werden.

Ein vorschlagsgemäßer Porenbeton ermöglicht im Vergleich zu handelsüblichem Porenbeton ein erheblich verbessertes Auslaugverhalten im Hinblick auf Sulfat. Statt Sulfatkonzentrationen in den Eluate zwischen 900 und 1650 mg/l können problemlos deutlich geringere Werte von 500 mg/l oder noch weniger Sulfat im Eluat erreicht werden.

Ein vorschlagsgemäßer Porenbeton weist im Vergleich zu handelsüblichem Porenbeton eine andere Farbgebung auf: Statt einer weißen Farbe erscheint der vorschlagsgemäße Porenbeton grau oder braun oder in einer grau/braunen Mischfarbe. Von Porenbeton, der unter Verwendung von Flugasche hergestellt ist und ebenfalls eine graue Farbgebung aufweisen kann, unterscheidet sich der vorschlagsgemäße Porenbeton durch die oben erwähnte signifikant geringere Sulfatkonzentration im Eluat.

Weiterhin weist ein vorschlagsgemäßer Porenbeton ein hervorragendes Schwindverhalten auf, welches bei Messungen, die an ersten hergestellten Proben-Porenbetonsteinen durchgeführt wurden, ein hygrisches Gesamtschwindverhalten von 0,4 mm/m oder weniger ergab.

In praktischen Versuchen haben Porenbetonrezepturen, in denen der Anteil an Sulfatträgern reduziert wurde und stattdessen Tone in Form von CT und / oder AT verwendet wurden, gute Ergebnisse gezeigt. Solche Porenbetonrezepturen enthielten die nachfolgenden Bestandteile, angegeben jeweils in Gewichtsprozent und bezogen auf die Trockenmasse der Mischung:
- Quarzmehl: 25 bis 65 %,
   insbesondere 30 bis 55 %
   das Quarzmehl kann durch gemahlenen Quarzsand, beispielsweise Sandschlamm, bereitgestellt werden
- Porenbetonrückgut aus Produktion: 5 bis 30 %, insbesondere 10 bis 28 %
- Zement: 0 bis 40 %,
   insbesondere 5 bis 35 %
- Branntkalk (CaO-Anteil 90 - 99 %): 5 bis 25 %,
   insbesondere 5 bis 20 %
- Calcinierter Ton CT: 0 bis 15 %,
   insbesondere 0 bis 12 %
- Amorpher Ton AT: 0 bis 15 %,
   insbesondere 0 bis 12 %
- wobei die Summe aus CT und AT wenigstens 1,5 % beträgt
- Sulfatträger z.B. Anhydrit, Gips: 0 bis 5 %,
   insbesondere 0 bis 3 %
- Porenbeton gemahlen: 0 bis 15 %,
   insbesondere 0 bis 10 %
- Aluminiumkomponente: 0,05 bis 0,4 %
- und Wasser

Die im vorschlagsgemäßen Porenbetonrezepturen enthaltenen Bestandteile können beispielsweise mittels einer chemischen Analyse und / oder per Röntgenbeugung und / oder weiterer Analysenmethoden nachgewiesen werden.

Die vorschlagsgemäßen Porenbetonrezepturen wurden unter den folgenden Bedingungen autoklaviert:
- Spülen: 0 bis 45 min
- Evakuieren bis 0,5 bar: 0 bis 45 min
- Aufheizen in einem ersten Aufheizschritt bis zu einem Druck von 4 bis 7 bar: 20 bis 120 min
- Haltezeit zwischen 4 bis 7 bar: 0 bis 60 min
- Aufheizen in einem zweiten Aufheizschritt bis zu einem Druck von 10 bis 13 bar: 40 bis 240 min
- Haltezeit bei 10 bis 13 bar: 240 bis 900 min
- "Abfahren" des Autoklaven zum Druckausgleich: 40 bis 180 min

Je nach den angewendeten Produktionsverfahren, die sich beispielsweise auch nach den in der Produktionsstätte vorhandenen Maschinen und Vorrichtungen richten, können die vorgenannten Einflussgrößen variieren. Der Fachmann wird daher in Kenntnis "seiner" jeweiligen Produktionsstätte und in Anlehnung an die bisherige Verfahrensweise zur Herstellung eines herkömmlichen Porenbetons die oben genannten Einflussgrößen bestimmen. Beispielsweise kann das Spülen oder das Evakuieren oder die Haltephase zwischen 4 und 7 bar gegebenenfalls entfallen, was oben durch den Hinweis "0 min" deutlich wird.

Ein wesentlicher Vorteil des vorliegenden Vorschlags liegt nämlich darin, dass vorhandene Produktionseinrichtungen und bislang verwendete Produktionsverfahren zur Herstellung von Porenbeton weitgehend beibehalten werden können und lediglich bei der Herstellung die Anteile an Zement und Sulfatträger verringert werden und stattdessen CT- und/oder AT-Ton verwendet wird. Die anschließende Anpassung der Verfahrensführung erfolgt, falls überhaupt erforderlich, dann in praxisüblicher Weise empirisch.

Beispielsweise können bei der Produktion typische Verfahrensabläufe beibehalten werden wie das in vielen Betrieben übliche Kippen des ausreichend angesteiften Porenbetonkuchens bzw. Rohlingskuchens: die für die Herstellung des Porenbetons verwendete Mischung an Rohstoffen stellt eine fließfähige Masse dar, die in einer liegenden, wannenartigen Gärform angesteift wird. In vielen Fällen überschreiten diese Gärformen ein Fassungsvermögen von 7 m³ nicht, und derartige Gärformen können auch für die vorschlagsgemäße Herstellung von Porenbeton weiterhin verwendet werden. Um diesen Rohlingskuchen anschließend in Porenbeton-Rohlinge bzw. Rohlingssteine von bestimmten Abmessungen aufzutrennen, wird in vielen Fällen die Gärform um 90° gekippt und der nun stehende Rohlingskuchen auf einen Schneidwagen verbracht, wo er dann in die gewünschten Steinformate geschnitten wird. Diese Vorgehensweise ist auch bei der Herstellung des vorschlagsgemäßen Porenbetons möglich.

Die Ergebnisse von ersten Versuchen zeigen, dass der komplette Ersatz des Sulfatträgers und eine Substitution von mindestens 20 Masseprozent des Zements durch calcinierten Ton (CT) und / oder den hochgebrannten amorphen Ton (AT) in der Porenbetonrezeptur erfolgen kann. Die Menge an auslaugbarem Sulfat konnte im Vergleich zu den Referenzproben aus handelsüblichem Porenbeton um bis zu 70 % reduziert werden. Dabei war die Menge an kristallinem Tobermorit in den Proben mit dem hochgebranntem amorphen Ton (AT) gleich oder höher, so dass der vorschlagsgemäße Porenbeton gute Werte für die mechanische Festigkeit sowie für das Schwindverhalten erwarten lässt.

## Patentansprüche

1. Sulfatarmer Porenbeton,
aus Wasser und aus den folgenden Bestandteilen, die jeweils in Gewichtsprozent und bezogen auf die Trockenmasse der Mischung angegeben sind:
25 bis 65 % Quarzmehl,
5 bis 30 % Porenbetonrückgut,
5 bis 25 % Branntkalk mit einem CaO-Anteil von 90 bis 99 Gewichts-%,
0,05 bis 0,4 % Aluminiumkomponente,
**dadurch gekennzeichnet,**
**dass** der Porenbeton weiterhin folgende Bestandteile enthält, ebenfalls in Gewichtsprozent und bezogen auf die Trockenmasse der Mischung angegeben:
0 bis 40 % Zement,
0 bis 15 % Porenbeton gemahlen,
0 bis 5% eines Sulfatträgers wie beispielsweise Anhydrit oder Gips,
0 bis 15% als CT bezeichneter, calcinierter Ton und/oder
0 bis 15% als AT bezeichneter amorpher Ton, wobei die Summe aus CT und AT wenigstens 1,5 % beträgt,
und der eine graue, braune oder eine grau/braune Farbgebung aufweist,
sowie ein Auslaugverhalten, welches eine Sulfatkonzentration von höchstens 500 mg/l Sulfat im Eluat ergibt,
und ein hygrisches Gesamtschwindverhalten von 0,4 mm/m oder weniger.

2. Mischung zur Herstellung von sulfatarmem Porenbeton nach Anspruch 1, enthaltend die nachfolgenden Bestandteile, angegeben jeweils in Gewichtsprozent und bezogen auf die Trockenmasse der Mischung:
Quarzmehl: 25 bis 65 %,
Porenbetonrückgut: 5 bis 30 %,
Zement: 0 bis 40 %,
Branntkalk mit einem CaO-Anteil von 90 bis 99 Gewichts-%: 5 bis 25 %,
Porenbeton gemahlen: 0 bis 15 %,
Aluminiumkomponente: 0,05 bis 0,4 %,
Sulfatträger, wie beispielsweise Anhydrit oder Gips: 0 bis 5 %,
CT: 0 bis 15 %,
AT: 0 bis 15 %,
wobei die Summe aus CT und AT wenigstens 1,5 % beträgt,
und Wasser.

3. Mischung zur Herstellung von sulfatarmem Porenbeton nach Anspruch 2, enthaltend 30 bis 55 % Quarzmehl, angegeben in Gewichtsprozent und bezogen auf die Trockenmasse der Mischung.

4. Mischung zur Herstellung von sulfatarmem Porenbeton nach Anspruch 2, enthaltend 10 bis 28 % Porenbetonrückgut aus Produktion, angegeben in Gewichtsprozent und bezogen auf die Trockenmasse der Mischung.

5. Mischung zur Herstellung von sulfatarmem Porenbeton nach Anspruch 2, enthaltend 5 bis 35 % Zement, angegeben in Gewichtsprozent und bezogen auf die Trockenmasse der Mischung.

6. Mischung zur Herstellung von sulfatarmem Porenbeton nach Anspruch 2, enthaltend 5 bis 20 % Branntkalk mit einem CaO-Anteil von 90 bis 99 %, angegeben in Gewichtsprozent und bezogen auf die Trockenmasse der Mischung.

7. Mischung zur Herstellung von sulfatarmem Porenbeton nach Anspruch 2, enthaltend höchstens 12 % CT, angegeben in Gewichtsprozent und bezogen auf die Trockenmasse der Mischung.

8. Mischung zur Herstellung von sulfatarmem Porenbeton nach Anspruch 2, enthaltend höchstens 12 % AT, angegeben in Gewichtsprozent und bezogen auf die Trockenmasse der Mischung.

9. Mischung zur Herstellung von sulfatarmem Porenbeton nach Anspruch 2, enthaltend höchstens 3 % Sulfatträger wie Anhydrit oder Gips, angegeben in Gewichtsprozent und bezogen auf die Trockenmasse der Mischung.

10. Mischung zur Herstellung von sulfatarmem Porenbeton nach Anspruch 2, enthaltend höchstens 10 % gemahlenen Porenbeton, angegeben in Gewichtsprozent und bezogen auf die Trockenmasse der Mischung.

11. Verfahren zur Herstellung eines sulfatarmen Porenbetons nach Anspruch 1,
wobei eine Mischung bereitgestellt wird, welche die folgenden Rohstoffe beinhaltet:
Kalk als reaktive CaO-Komponente,
Quarzmehl als reaktive SiO2-Komponente,
Wasser,
Zement und
Aluminium als Treibmittel,
und wobei die Rohstoffe gravimetrisch verwogen und zur Herstellung der Mischung in einem Mischer miteinander vermengt werden,
und die Mischung in Form einer gießfähigen Masse in eine sogenannte Gärform eingebracht wird, und die Masse in der Gärform verbleibt, wobei sie durch das Aluminium auftreibt und bis zur Schneidfähigkeit, nämlich dem Erreichen einer bestimmten Rohlingsfestigkeit, ansteift,
und wobei der so hergestellte Rohlingskuchen nach dem Erreichen der Schneidfähigkeit in bestimmte Steinformate geschnitten wird,
und die so erzeugten Porenbetonrohlinge im Autoklaven gehärtet werden,
**dadurch gekennzeichnet,**
**dass** eine Mischung nach einem der Ansprüche 2 bis 10 verwendet wird,
und ein Porenbeton geschaffen wird, der der eine graue, braune oder eine grau/braune Farbgebung aufweist,
sowie ein Auslaugverhalten, welches eine Sulfatkonzentration von höchstens 500 mg/l Sulfat im Eluat ergibt,
und ein hygrisches Gesamtschwindverhalten von 0,4 mm/m oder weniger.

12. Verfahren nach Anspruch 11,
**dadurch gekennzeichnet,**
**dass** der Rohlingskuchen nach dem Erreichen der Schneidfähigkeit zusammen mit der Gärform um 90° gekippt, auf einen Sägewagen abgestellt und entschalt wird, bevor er in die bestimmten Steinformate geschnitten wird.

13. Verfahren nach Anspruch 11 oder 12,
**dadurch gekennzeichnet,**
**dass** eine Gärform mit einem Volumen von höchstens 7 m³ verwendet wird.

14. Verfahren nach einem der Ansprüche 11 bis 13,
**dadurch gekennzeichnet,**
**dass** die Porenbetonrohlinge im Autoklaven aufgeheizt werden, bis im Autoklaven ein Druck von 4 bis 7 bar herrscht,
wobei dieser Aufheizvorgang über eine Zeitdauer von 20 bis 120 min durchgeführt wird.

15. Verfahren nach einem der Ansprüche 11 bis 14,
**dadurch gekennzeichnet,**
**dass** die Porenbetonrohlinge im Autoklaven zunächst in einem ersten Aufheizschritt aufgeheizt werden, bis im Autoklaven ein Druck von 4 bis 7 bar herrscht,
und anschließend in einem zweiten Aufheizschritt aufgeheizt werden, bis im Autoklaven ein Druck von 10 bis 13 bar herrscht,
wobei dieser zweite Aufheizschritt über eine Zeitdauer von 40 bis 240 min durchgeführt wird.

## Claims

1. Low-sulphate aerated concrete, prepared from water and the following constituents, each specified as a percentage by weight of the dry material in the mixture:
25 to 65 % quartz flour,
5 to 30 % returned aerated concrete,
5 to 25 % burnt lime with a CaO content of 90 to 99 per cent by weight,
0.05 to 0.4 % aluminium component,
**characterised in that** the aerated concrete further contains the following constituents, likewise each specified as a percentage by weight of the dry material in the mixture:
0 to 40 % cement,
0 to 15 % aerated concrete, ground,
0 to 5 % of a sulphate carrier such as anhydrite or gypsum,
0 to 15 % calcined clay, referred to as CC, and/or
0 to 15 % amorphous clay, referred to as AC,
where the total of CC and AC comes to at least 1.5 %,
and which is of a grey, brown or grey-brown colour
and a leaching behaviour that results in a sulphate concentration of maximum 500 mg/l sulphate in the eluate and a total hygric shrinkage of 0.4 mm/m or less.

2. Mixture for the preparation of low-sulphate aerated concrete in accordance with claim 1, containing the following constituents, each specified as a percentage by weight of the dry material in the mixture:
quartz flour: 25 to 65 %,
returned aerated concrete: 5 to 30 %,
cement: 0 to 40 %,
burnt lime with a CaO content of 90 to 99 per cent by weight: 5 to 25 %,
aerated concrete, ground: 0 to 15 %,
aluminium component: 0.05 to 0.4 %,
sulphate carrier such as anhydrite or gypsum: 0 to 5 %,
CC: 0 to 15 %,
AC: 0 to 15 %,
where the total of CC and AC comes to at least 1.5 %,
and water.

3. Mixture for the preparation of low-sulphate aerated concrete in accordance with claim 2, containing 30 to 55 % quartz flour, specified as a percentage by weight of the dry material in the mixture.

4. Mixture for the preparation of low-sulphate aerated concrete in accordance with claim 2, containing 10 to 28 % aerated concrete returned from production, specified as a percentage by weight of the dry material in the mixture.

5. Mixture for the preparation of low-sulphate aerated concrete in accordance with claim 2, containing 5 to 35 % cement, specified as a percentage by weight of the dry material in the mixture.

6. Mixture for the preparation of low-sulphate aerated concrete in accordance with claim 2, containing 5 to 20 % burnt lime with a CaO content of 90 to 99 per cent, specified as a percentage by weight of the dry material in the mixture.

7. Mixture for the preparation of low-sulphate aerated concrete in accordance with claim 2, containing maximum 12 % CC, specified as a percentage by weight of the dry material in the mixture.

8. Mixture for the preparation of low-sulphate aerated concrete in accordance with claim 2, containing maximum 12 % AC, specified as a percentage by weight of the dry material in the mixture.

9. Mixture for the preparation of low-sulphate aerated concrete in accordance with claim 2, containing maximum 3 % of a sulphate carrier such as anhydrite or gypsum, specified as a percentage by weight of the dry material in the mixture.

10. Mixture for the preparation of low-sulphate aerated concrete in accordance with claim 2, containing maximum 10 % aerated ground concrete, specified as a percentage by weight of the dry material in the mixture.

11. Method for preparing low-sulphate aerated concrete in accordance with claim 1, where a mixture is prepared which contains the following raw materials:
lime as reactive CaO component,
quartz flour as reactive SiO₂ component,
water,
cement and
aluminium as expanding agent
and where the raw materials are weighed gravimetrically and mixed together in a mixer to prepare the mixture
and the mixture in the form of castable material is placed into a so-called fermentation mould and this material remains in the fermentation mould,
where the material is expanded by the aluminium and sets until it can be cut, that is, until it reaches a specific blank stability
and where after reaching a state in which it can be cut the blank cake thus produced is cut into specific stone formats
and the aerated concrete blanks thus produced are hardened in an autoclave,
**characterised in that** a mixture in accordance with any one of claims 2 to 10 is used and an aerated concrete is produced that is of a grey, brown or grey-brown colour
and a leaching behaviour that yields a maximum sulphate concentration of maximum 500 mg/l sulphate in the eluate and a total hygric shrinkage of 0.4 mm/m or less.

12. Method in accordance with claim 11, **characterised in that** after reaching a state in which it can be cut the blank cake together with the fermentation mould is tilted through 90°, placed on a saw carriage and removed from the mould, before being cut into the specific stone formats.

13. Method in accordance with claim 11 or 12, **characterised in that** a fermentation mould with a maximum volume of 7 m³ is used.

14. Method in accordance with any one of claims 11 to 13, **characterised in that** the aerated concrete blanks are heated in an autoclave until a pressure of from 4 to 7 bar is reached in the autoclave, where this heating operation is carried out over a time period of from 20 to 120 min.

15. Method in accordance with any one of claims 11 to 14, **characterised in that** in a first heating step the aerated concrete blanks are first heated in an autoclave until a pressure of from 4 to 7 bar is reached in the autoclave and then in a second heating step are heated until a pressure of from 10 to 13 bar is reached in the autoclave, where this second heating step is carried out over a time period of from 40 to 240 min.

## Revendications

1. Béton cellulaire pauvre en sulfate, composé d'eau et des ingrédients suivants, respectivement indiqués en pourcentage pondéral et en référence à la masse sèche du mélange :
25 à 65 % de poudre de quartz,
5 à 30 % de béton cellulaire réintroduit,
5 à 25 % de chaux vive avec une part pondérale de CaO comprise entre 90 et 99 %,
0,05 à 0,4 % de composante aluminium,
**caractérisé en ce que** le béton cellulaire contient en outre les ingrédients suivants, également indiqués en pourcentage pondéral et en référence à la masse sèche du mélange :
0 à 40 % de ciment,
0 à 15 % de béton cellulaire moulu,
0 à 5 % d'un support de sulfate dont par exemple de l'anhydrite ou du plâtre,
0 à 15 % d'argile calcinée appelée « AC » et/ou
0 à 15 % d'argile amorphe appelée « AA »,
sachant que la somme d'AC plus AA est d'au moins 1,5 %,
et présente une coloration grise, brune ou grise/brune,
ainsi qu'un comportement de lixiviation donnant une concentration en sulfate d'au maximum 500 mg/l de sulfate dans l'éluat, et un comportement de retrait hygrique total de 0,4 mm/m ou moins.

2. Mélange pour la fabrication de béton cellulaire pauvre en sulfate selon la revendication 1, contenant les ingrédients suivants, respectivement indiqués en pourcentage pondéral et en référence à la masse sèche du mélange :
Poudre de quartz : 25 à 65 %,
Béton cellulaire réintroduit : 5 à 30 %,
Ciment : 0 à 40 %,
Chaux vive avec une part de CaO comprise entre 90 et 99 % pondéraux : 5 à 25 %,
Béton cellulaire moulu : 0 à 15 %,
Composante aluminium : 0,05 à 0,4 %,
Support de sulfate dont par exemple de l'anhydrite ou du plâtre : 0 à 5 %,
AC : 0 à 15 %,
AA : 0 à 15 %,
sachant que la somme d'AC plus AA est d'au moins 1,5 %,
et eau.

3. Mélange pour la fabrication de béton cellulaire pauvre en sulfate selon la revendication 2, contenant 30 à 55 % de poudre de quartz, indiqués en pourcentage pondéral et en référence à la masse sèche du mélange.

4. Mélange pour la fabrication de béton cellulaire pauvre en sulfate selon la revendication 2, contenant 10 à 28 % de béton cellulaire réintroduit de la production, indiqués en pourcentage pondéral et en référence à la masse sèche du mélange.

5. Mélange pour la fabrication de béton cellulaire pauvre en sulfate selon la revendication 2, contenant 5 à 35 % de ciment, indiqués en pourcentage pondéral et en référence à la masse sèche du mélange.

6. Mélange pour la fabrication de béton cellulaire pauvre en sulfate selon la revendication 2, contenant 5 à 20 % de chaux vive avec une part pondérale de CaO comprise entre 90 et 99 %, indiqués en pourcentage pondéral et en référence à la masse sèche du mélange.

7. Mélange pour la fabrication de béton cellulaire pauvre en sulfate selon la revendication 2, contenant au maximum 12 % d'AC, indiqués en pourcentage pondéral et en référence à la masse sèche du mélange.

8. Mélange pour la fabrication de béton cellulaire pauvre en sulfate selon la revendication 2, contenant au maximum 12 % d'AA, indiqués en pourcentage pondéral et en référence à la masse sèche du mélange.

9. Mélange pour la fabrication de béton cellulaire pauvre en sulfate selon la revendication 2, contenant au maximum 3 % de support de sulfate, dont de l'anhydrite ou du plâtre, indiqués en pourcentage pondéral et en référence à la masse sèche du mélange.

10. Mélange pour la fabrication de béton cellulaire pauvre en sulfate selon la revendication 2, contenant au maximum 10 % de béton cellulaire moulu, indiqués en pourcentage pondéral et en référence à la masse sèche du mélange.

11. Procédé pour la fabrication d'un béton cellulaire pauvre en sulfate selon la revendication 1, sachant qu'est fourni un mélange contenant les matières premières suivantes :
calcaire en tant que composante CaO réactive,
poudre de quartz en tant que composante SiO₂ réactive,
eau,
ciment et
aluminium en tant qu'agent propulseur,
et sachant que les matières premières sont pesées par gravimétrie et que pour réaliser le mélange elles sont mélangées dans un mélangeur,
et que le mélange en forme de masse moulable est introduit dans un moule dit de fermentation, et que la masse demeure dans le moule de fermentation,
sachant qu'elle lève en raison de l'aluminium et qu'elle se rigidifie jusqu'à acquérir l'aptitude au découpage, à savoir jusqu'à l'atteinte d'une fermeté précise de la pièce brute,
et sachant que la tourte brute ainsi confectionnée est, après avoir atteint l'aptitude au découpage, découpée en formats de pierre précis,
et que les pièces brutes en béton cellulaire ainsi confectionnées sont trempées en autoclave,
**caractérisé en ce qu'**est utilisé un mélange selon l'une des revendications 2 à 10, et qu'est créé un béton cellulaire présentant une coloration grise, brune ou une coloration grise/brune,
ainsi qu'un comportement de lixiviation donnant une concentration en sulfate d'au maximum 500 mg/l de sulfate dans l'éluat, et un comportement global de retrait hygrique de 0,4 mm/m ou moins.

12. Procédé selon la revendication 11, **caractérisé en ce que** la tourte brute est, après avoir atteint l'aptitude au découpage, basculée à 90° avec le moule de fermentation, déposée sur un chariot de sciage et décoffrée avant d'être découpée en formats de pierre précis.

13. Procédé selon la revendication 11 ou 12, **caractérisé en ce qu'**est utilisé un moule de fermentation présentant un volume d'au maximum 7 m³.

14. Procédé selon l'une des revendications 11 à 13, **caractérisé en ce que** les pièces brutes en béton cellulaire sont chauffées en autoclave jusqu'à atteindre une pression de 4 à 7 bars dans l'autoclave, sachant que cette opération d'échauffement est réalisée sur une période de 20 à 120 mm.

15. Procédé selon l'une des revendications 11 à 14, **caractérisé en ce que** les pièces brutes en béton cellulaire sont dans un premier temps échauffées dans l'autoclave au cours d'une première étape d'échauffement, jusqu'à ce qu'il règne dans l'autoclave une pression comprise entre 4 à 7 bars, et qu'ensuite au cours d'une deuxième étape d'échauffement elles sont échauffées, jusqu'à ce qu'il règne dans l'autoclave une pression de 10 à 13 bars, sachant que cette deuxième étape d'échauffement se déroule sur une période comprise entre 40 et 240 minutes.
